# EUROPÄISCHE PATENTSCHRIFT

(11) **EP 0 687 393 B1**
(45) Veröffentlichungstag und Bekanntmachung des Hinweises auf die Patenterteilung: **19.11.1997**
(21) Anmeldenummer: 95905124.4
(22) Anmeldetag: 05.01.1995
(51) Int. Cl.: H02G 3/04

(54) **WANDINSTALLATIONSKANAL FÜR ELEKTROINSTALLATIONSEINRICHTUNGEN**
WALL INSTALLATION CHANNEL FOR ELECTRIC INSTALLATION ARRANGEMENTS
CONDUIT MURAL D'INSTALLATION POUR DISPOSITIFS D'INSTALLATION ELECTRIQUES

(30) Priorität: 06.01.1994 DE 4400249
(43) Veröffentlichungstag der Anmeldung: 20.12.1995
(73) Patentinhaber: Albert Ackermann GmbH & Co. KG, 51643 Gummersbach (DE)
(72) Erfinder: STAHL, Ulrich, D-53842 Troisdorf (DE); EICHER, Helmut, D-57482 Wenden (DE)
(74) Vertreter: Wilhelm & Dauster Patentanwälte European Patent Attorneys
(86) Internationale Anmeldenummer: EP9500041
(87) Internationale Veröffentlichungsnummer: WO9519058

(56) Entgegenhaltungen:
- DE-A- 4 103 708
- DE-U- 9 004 774
- US-A- 4 406 379

## Beschreibung

Die Erfindung betrifft einen Wandinstallationskanal für Elektroinstallationseinrichtungen mit einem entlang einer Wand montierbaren, längsgestreckten Gehäuseprofil und mit wenigstens einer um eine längs des Gehäuseprofils verlaufende Scharnierachse am Gehäuseprofil schwenkbar gelagerten Blende, die wenigstens eine Längsseite des Gehäuseprofils abdeckt.

Aus der DE 90 04 774 U1 ist ein Wandinstallationskanal bekannt. Der Wandinstallationskanal weist ein U-ähnliches Gehäuseprofil auf, das stationär an einer Wand befestigbar ist. Dieses Gehäuseprofil dient zum An- und Einbau von elektrischen Installationsgeräten. Eine offene Vorderseite des Gehäuseprofils ist durch eine sich längs entlang des Gehäuseprofils erstreckende Blende abgedeckt, die mittels einer Scharnierancrdnung um eine längsverlaufende Scharnierachse am Gehäuseprofil schwenkbar gelagert ist. Als Scharnieranordnung ist an einer oberen Vorderkante des Gehäuseprofils eine rinnenartige Längsnut vorgesehen, in die von einem Ende des Gehäuseprofils aus ein rohrähnliches Gegenstück an einem Ende der Blende eingeschoben ist. Das rohrähnliche Gegenstück der Blende und damit die Blende selbst sind in der Längsnut um die längsverlaufende Scharnierachse schwenkbar. Sowohl der Querschnitt des rohrförmigen Gegenstückes als auch der Querschnitt der Längsnut weisen zwei abgestufte Bereiche größeren und kleineren Durchmessers auf, wodurch sich Anschlagbereiche für eine Begrenzung des Öffnungswinkels der Blende ergeben. Das Gehäuseprofil und die Blende sind aus Aluminium cder aus Kunststoff hergestellt. Da das Scharniergegenstück der Blende über die gesamte Länge des Gehäuseprofils mit der Längsnut Flächenberührung hat, kann die Scharnieranordnung sich bei einer Befestigung des Gehäuseprofiles an einer unebenen Wand verklemmen. Dann verzieht sich nämlich die Längsnut des Gehäuseprofils und klemmt das rohrförmige Gegenstüctk der Blende.

Aufgabe der Erfindung ist es, einen Wandinstallationskanal der eingangs genannten Art zu schaffen, der chne weiteres ein nachträgliches Anbringen der Blende am bereits stationär befestigten Gehäuseprofil und eine leichtgängige Schwenklagerung der Blende unabhängig von der stationären Anordnung des Gehäuseprofils ermöglicht.

Diese Aufgabe wird dadurch gelöst, daß sowohl an der Blende als auch am Gehäuseprofil parallel zur Scharnierachse verlaufende und sich jeweils über deren Länge erstreckende Profilierungen vorgesehen sind, und daß wenigstens zwei über die Länge des Wandinstallationskanals in Abstand zueinander positionierbare Scharniere vorgesehen sind, die mit den Profilierungen an der Blende und am Gehäuseprofil in quer zur Scharnierachse verlaufender Montagerichtung verrastbar sind. Dadurch ist es möglich, die Blende nachträglich an dem bereits an einer Wand befestigten Gehäuseprofil anzubringen. Die Scharniere sind nämlich von der Blende und von dem Gehäuseprofil getrennte Bauteile, die über die Länge der Blende und des Gehäuseprofils an beliebiger Stelle mit den korrespondierenden Profilierungen an Blende und Gehäuseprofil verrastbar sind. Durch die Montagerichtung der Scharniere quer zur Scharnierachse kann die Blende mit dem Gehäuseprofil verbunden werden, ohne daß die Blende seitlich von einem Ende des Gehäuseprofils her eingeschoben werden muß. Dies ist insbesondere bei beengten Einbauverhältnissen vcn Vorteil, da noch nach dem Einbau und der Verkabelung aller Elektroinstallationseinrichtungen die Blende aufgebracht werden kann. Da sich die Profilierungen über die gesamte Länge des Gehäuseprofils bzw. der Blende erstrecken, können die Scharniere an beliebigen Stellen mit diesen verrastet werden. Durch die Anordnung der Scharniere an beliebigen Positionen über die Länge von Gehäuseprofil und Blende wird die Schwenklagerung der Blende weder durch eine konkave noch eine konvexe Verbiegung des Gehäuseprofils beeinträchtigt. Die Scharniere sind daher über die gesamte Länge des Wandinstallationskanals an den Profilierungen ortsunabhängig montierbar. Durch die Verrastung der Scharniere an den Profilen ist kein Werkzeug notwendig, um die Scharniere an der Blende und an dem Gehäuseprofil zu fixieren.

In Ausgestaltung der Erfindung ist die Blende in wenigstens zwei Teile längsgeteilt, wobei die Teile untereinander mit zur Scharnierachse paralleler Schwenkachse mittels Scharnieren verbunden sind, die mit Profilierungen an den korrespondierenden Teilen der Blende verrastet sind. Die Schwenklagerung der Teile der Blende relativ zueinander ist identisch mit der Schwenklagerung der Blende am Gehäuseprofil. Dies hat zum einen den Vorteil, daß zunächst lediglich ein Teil der Blende zur Abdeckung von einer Längsseite des Kanalunterteiles an diesem befestigt werden kann, so daß ein Teil des Wandinstallationskanales bereits abgedeckt ist, am anderen, noch freiliegenden Teil jedoch noch An- oder Einbauarbeiten vorgenommen werden können. Zum anderen wird durch die Teilung der Blende der zum Öffnen benötigte Schwenkraum wesentlich verkleinert.

In weiterer Ausgestaltung der Erfindung sind die Scharniere um die Scharnierachse in einer Drehrichtung federbelastet. Dadurch sind die Blende relativ zum Gehäuseprofil und gegebenenfalls die Teile der Blende relativ zueinander entweder in einer Schließrichtung oder in einer Öffnungsrichtung federbelastet, so daß die Blende entweder automatisch in eine geschlossene oder in eine geöffnete Endposition gedrückt wird. Wird die Blende durch die Federbelastung automatisch in eine geöffnete Endposition gedrückt, so sind für die geschlossene Endposition zusätzliche Fixierungselemente in Form eines Schlosses oder ähnlichem vorhanden, um den Wandinstallationskanal geschlossen zu halten.

In weiterer Ausgestaltung der Erfindung sind als Profilierungen sowohl an der Blende als auch am Gehäuseprofil zwei in Abstand zueinander angeordnete Längsstege vorgesehen, die mit jeweils einer zum anderen Längssteg hin offenen längsverlaufenden Aufnahmenut versehen sind. Zwischen diesen Aufnahmenuten sind die Scharniere in einfacher Weise einrastbar.

In weiterer Ausgestaltung der Erfindung weist jedes Scharnier zwei Scharnierschenkel auf, von denen einer an der Blende und der andere am Gehäuseprofil verrastbar sind.

In weiterer Ausgestaltung weist jeder Scharnierschenkel zwei einander gegenüberliegende und zueinander parallele Seitenkanten auf, deren Abstand zueinander etwa dem gegenseitigen Abstand der korrespondierenden Aufnahmenuten entspricht, und die unter Verringerung ihres Abstandes elastisch gegeneinander zusammendrückbar sind. Durch das elastische Zusammendrücken der Seitenkanten ist jeder Scharnierschenkel zwischen die beiden korrespondierenden Längsstege von Hand einsetzbar. Durch die Elastizität des Scharnierschenkels spreizen sich die Seitenkanten nach dem Wegnehmen der Belastung durch das Zusammendrücken elastisch auseinander und drücken sich in die Aufnahmenuten hinein. Dadurch ist jeder Scharnierschenkel zwischen den Längsstegen eingerastet und erhält durch die zu der Scharnierachse parallelen gegenüberliegenden Seitenkanten eine definierte Position.

In weiterer Ausgestaltung der Erfindung ist jedes Scharnier einstückig aus einem Federdraht unter Bildung eines zur Scharnierachse koaxialen zylindrischen Schraubenfederteiles und zwei von dem Schraubenfederteil abragenden Federenden gebogen, wobei die Federenden als Scharnierschenkel mit gegenüberliegenden Seitenkanten gestaltet sind. Dadurch wird ein besonders einfach herzustellendes Scharnier geschaffen, in dem die Federfunkticn bereits integriert ist. Dieses Scharnier ist verschmutzungsunempfindlich und wartungsfrei.

In weiterer Ausgestaltung der Erfindung weist jedes als Scharnierschenkel dienende Federende ein Griffelement zum Zusammendrücken des Scharnierschenkels auf. Dadurch wird das manuelle Einsetzen des Scharnierschenkels in die korrespondierenden Aufnahmenuten vereinfacht.

In weiterer Ausgestaltung der Erfindung sind die Scharnierschenkel jedes Scharnieres symmetrisch zueinander gestaltet. Dadurch können die Scharniere seitenunabhängig eingebaut werden.

In weiterer Ausgestaltung der Erfindung sind an beiden durch das Scharnier zu verbindenden Teilen längsverlaufende Stützprofilelemente vorgesehen, zwischen denen der zylindrische Schraubenfederteil des Scharniers gehalten ist. Dadurch ist die Außenkontur der Federwicklung des Schraubenfederteiles abgestützt, wodurch sich eine definierte Verschwenkung der beiden Teile, d.h. entweder der Blende am Gehäuseprofil oder der beiden Blendenteile zueinander, ergibt.

Weitere Vorteile und Merkmale der Erfindung ergeben sich aus den Unteransprüchen sowie aus der nachfolgenden Beschreibung eines Ausführungsbeispiels der Erfindung, das anhand der Zeichnungen dargestellt ist.
- Fig. 1: zeigt einen Querschnitt durch das Ausführungsbeispiel eines erfindungsgemäßen Wandinstallationskanales, bei dem eine zweiteilige Blende an einem als Kanalunterteil dienenden Gehäuseprofil schwenkbar gelagert und in der geschlossenen Position dargestellt ist,
- Fig. 2: ebenfalls in einem Querschnitt den Wandinstallationskanal nach Fig. 1, bei dem die Blende sich in einer teilweise geöffneten Position befindet,
- Fig. 3: den Wandinstallationskanal nach den Fig. 1 und 2 mit vollständig geöffneter Blende,
- Fig. 4: in vergrößerter Darstellung einen Querschnitt durch die Scharnieranordnung zwischen Blende und Gehäuseprofil des Wandinstallationskanales nach den Fig. 1 bis 3,
- Fig. 5: ebenfalls in vergrößerter Darstellung eine Draufsicht auf eine als Scharnier dienende Scharnierfeder und
- Fig. 6: eine Seitenansicht der Scharnierfeder nach Fig. 5.

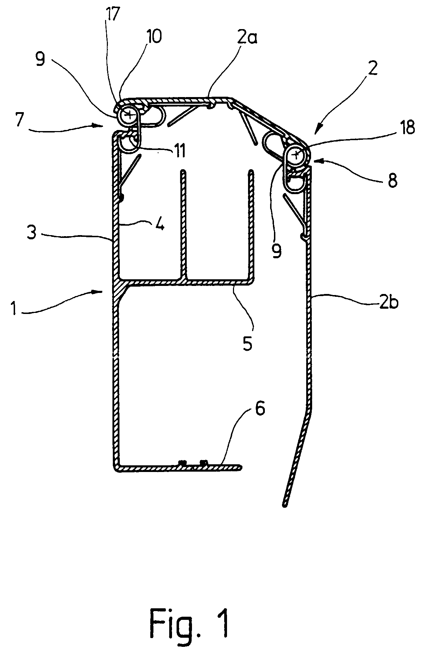

Ein Wandinstallationskanal nach den Fig. 1 bis 4 dient zur Aufnahme elektrischer Installationsgeräte sowie zur Aufnahme der dafür notwendigen elektrischen Kabelführungen. Er weist ein als Kanalunterteil dienendes, längsgestrecktes Gehäuseprofil (1) auf, das an einer Rückwand (3) stationär an einer Wand befestigbar ist. Das Gehäuseprofil (1) weist einen von einer Vorderseite (4) der Rückwand (3) nach vorne abragenden unteren Boden (6) und in Abstand oberhalb des unteren Bodens (6) einen cberen Boden (5) auf, von dem zwei nicht näher bezeichnete, zur Rückwand (3) parallele Wandungen nach oben abragen. Durch das so gestaltete Gehäuseprofil (1) ergeben sich unterschiedliche Kammern in verschiedenen Installationsebenen, so daß vielfältige Möglichkeiten für den Einbau der Elektroinstallationsgeräte bestehen. Das als Kanalunterteil dienende Gehäuseprofil (1) ist über seine gesamte Länge durch eine Blende (2) abdeckbar. Die Blende (2) weist ein etwa L-förmiges Winkelprofil auf und ist in Längsrichtung in zwei Blendenteile (2a und 2b) unterteilt.

Die Blende (2) ist um eine längs des Gehäuseprofils (1) verlaufende Scharnierachse (17) an dem Gehäuseprofil (1) schwenkbar gelagert. Der Blendenteil (2b) ist am Blendenteil (2a) um eine Schwenkachse (18) schwenkbar gelagert, die zur Scharnierachse (17) parallel ist. Der Blendenteil (2a) der Blende (2) ist mittels einer nachfolgend näher beschriebenen Scharnieranordnung (7) an dem Gehäuseprofil (1) gehalten. Der Blendenteil (2b) ist an dem Blendenteil (2a) mittels einer ebenfalls noch näher beschriebenen Scharnieranordnung (8) gehalten. Beim Ausführungsbeispiel sind das Gehäuseprofil (1) und die Blende (2) aus Aluminium hergestellt. Bei einem anderen Ausführungsbeispiel der Erfindung besteht der Wandinstallationskanal aus Kunststoff. Bei einem weiteren Ausführungsbeispiel ist das Gehäuseprofil (1) aus Stahlblech und der obere Boden (5) aus einem Metallgitter.

Als Scharnieranordnungen (7, 8) sind beim Ausführungsbeispiel mehrere Federscharniere (9) vorgesehen. Zur Lagerung des Blendenteiles (2a) am Gehäuseprofil (1) sind zwei entlang der Scharnierachse (17) in Abstand zueinander angeordnete Federscharniere (9) vorgesehen, von denen im dargestellten Querschnitt lediglich eines sichtbar ist. Auch zur Lagerung des Blendenteiles (2b) an dem Blendenteil (2a) sind ebenfalls zwei Federscharniere (9) vorgesehen, die in Abstand zueinander entlang der Schwenkachse (18) positioniert sind. Auch hier ist lediglich das vordere Federscharnier (9) sichtbar. Je nach Länge des Wandinstallationskanales kommen für jede Scharnieranordnung (7, 8) jeweils mehr als zwei Federscharniere (9) zum Einsatz, die zweckmäßig jeweils den gleichen Abstand zueinander haben, um eine gleichmäßige Lastverteilung zu gewährleisten.

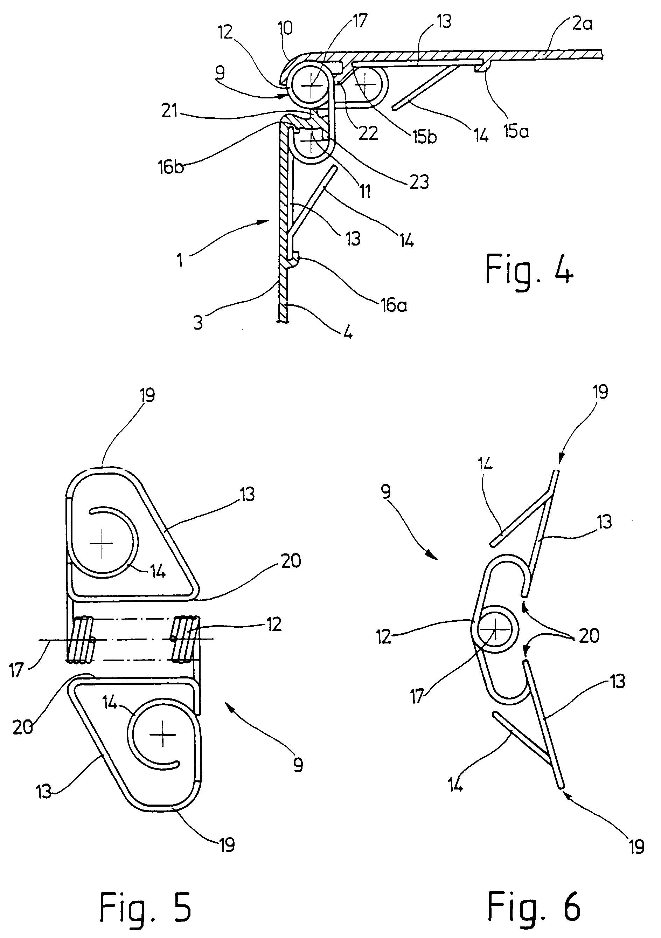

Jedes Federscharnier (9) ist einstückig aus einem Federdraht gebogen und weist gemäß den Fig. 5 und 6 einen zylindrisch gewickelten Schraubenfederteil (17) auf, dessen Mittellängsachse im eingebauten Zustand der Scharnierachse (17) bzw.der Schwenkachse (18) entspricht. Der Schraubenfederteil (12) stellt somit den mittleren Teil der Scharnierfeder (9) dar. Die gegenüberliegenden Federdrahtenden des Schraubenfederteiles (12) ragen jeweils seitlich nach außen ab und sind zu als Scharnierschenkel dienenden Federschenkeln gebogen. Jeder Federschenkel weist dabei eine - auf die Mittellängsachse des Schraubenfederteiles (12) bezogen - innere Längskante (20) auf, die durch einen parallel zur Mittellängsachse verlaufenden linearen Federdrahtteil gebildet ist. Dieser Federdrahtteil geht über in einen als Biegeelement (13) dienenden Federdrahtteil, der schräg nach außen gerichtet ist. An das Biegeelement (13) schließt eine äußere Längskante (19) des Federdrahtes an, die parallel zur inneren Längskante (20), jedoch lediglich etwa halb so lang ist. Das an die Längskante (19) anschließende freie Ende des Federdrahtes ist nach innen zu einer Grifföse (14) qebogen. Die innere Längskante (20) und die äußere Längskante (19) sowie das Biegeelement (13) von jedem der beiden Federschenkel der Scharnierfeder (9) sind jeweils in einer gemeinsamen Ebene angeordnet. Die Grifföse (14) hingegen ragt schräg zu dieser gemeinsamen Ebene ab. Die gegenüberliegenden Federschenkel sind punktsymmetrisch zueinander ausgebildet, so daß die jeweils gegenüberliegenden Biegeelemente (13) parallel zueinander sind. Dadurch kann die Scharnierfeder (9) beispielsweise ohne weiteres in der Zeichenebene nach Fig. 5 um 180° verdreht werden, ohne daß sich ihre Einsatzmöglichkeit verändert.

Das so gebildete Federscharnier (9) ist in einfacher Weise an den jeweils miteinander zu verbindenden Teilen des Wandinstallationskanales fixierbar. Dazu sind an der Rückwand (3) des Gehäuseprofiles (1) zwei von der Vorderseite (4) nach vorne abragende Profilierungen (16a und 16b) vorgesehen, die sich jeweils über die gesamte Länge des Gehäuseprofils (1) erstrecken und parallel zur Scharnierachse (17) verlaufen. Die Profilierung (16a) weist ein hakenartig nach oben gerichtetes Profil auf, wodurch sich ein Längssteg mit einer nach oben offenen, längsverlaufenden Aufnahmenut ergibt. Die obere Profilierung (16b) ist im Bereich einer oberen Stirnkante (11) der Rückwand (3) vorgesehen, wobei das Profil der Stirnkante (11) von der Rückwand (3) zur Vorderseite hin abragt. Auf Höhe des unteren Längssteges der Profilierung (16a) ragt von dem Profil der Stirnkante (11) ein korrespondierender Längssteg zur unteren Profilierung (16a) hin nach unten ab, wodurch zwischen Rückwand (3) und dem Längssteg eine längsverlaufende, obere Aufnahmenut entsteht, deren Querschnitt dem der unteren Aufnahmenut entspricht. In gleicher Weise sind an der Innenseite des Blendenteiles (2a) längsverlaufende Profilierungen (15a und 15b) vorgesehen. Diese entsprechen in Fcrm und Aufbau den zuvor beschriebenen Profilierungen (16a und 16b), so daß auf eine nähere Erläuterung verzichtet werden kann. Der Abstand des Grundes der jeweils gegenüberliegenden Aufnahmenuten der Profilierungen (16a und 16b bzw. 15a und 15b) entspricht dem Abstand der inneren Längskante (20) und der äußeren Längskante (19) jedes Federschenkels der Scharnierfeder (9). Jede Scharnierfeder (9) kann daher bezüglich der Länge des Gehäuseprofils (1) gesehen an einer beliebigen Stelle zwischen die Profilierungen (16a und 16b) eingesetzt und verklemmt werden.

Zur Verrastung eines Federschenkels in den korrespondierenden Profilierungen (16a und 16b bzw.15a und 15b) wird zweckmäßigerweise zunächst die innere Längskante (20) des Federschenkels in die zugehörige Profilierung (16b bzw 15b) eingesetzt. Anschließend wird mittels der Grifföse (15) der Federschenkel so elastisch verbogen, daß sich der Abstand der äußeren Längskanten (19) zur bereits stationär eingesetzten inneren Längskante (20) verringert. Dadurch ist es möglich, die äußere Längskante (19) über den Längssteg der unteren Profilierung (16a) in die Aufnahmenut einschnappen zu lassen. Die elastische Verformung des Federschenkels wird im wesentlichen durch die elastische Verbiegung des Biegeelementes (13) erreicht. Gibt die Bedienperson nun die Grifföse (14) frei, so spreizt sich automatisch der Federschenkel wieder elastisch, wodurch sich die beiden Längskanten (19 und 20) in den jeweiligen Grund der Aufnahmenuten der Profilierungen (16a und 16b bzw. 15a und 15b) hineinpressen. Jeder Federschenkel des Federscharnieres (9) ist daher in den zugehörigen Profilierungen verrastet. Die Montagerichtung erfolgt quer zur Scharnierachse (17), d.h. lotrecht zur Rückwand (3) bzw. zur Innenseite des Blendenteiles (2a). Die Sicherung jedes Federschenkels in Längsrichtung der Profilierungen (16a, 16b; 15a,15b) ergibt sich durch eine Verklemmung aufgrund der elastischen Spreizung des Federschenkels in den Aufnahmenuten. Die Fixierung jedes Federschenkels entgegen der Montagerichtung erfolgt formschlüssig durch die jeweiligen Längsstege der Profilierungen (16a,16b; 15a,15b).

Da beide Federschenkel einer Scharnierfeder (9) in gleicher Weise montierbar und in entsprechend umgekehrter Reihenfolge auch wieder demontierbar sind, sind die verschiedenen Scharnierfedern (9) der Scharnieranordnungen (7 und 8) mit wenigen Handgriffen an den jeweiligen Teilen des Wandinstallationskanals verrast- und fixierbar. Um eine definierte Position der Scharnierachse (17) und damit eine definierte Verschwenkung des Blendenteiles (2a) relativ zum Gehäuseprofil (1) zu erreichen, sind sowohl am Blendenteil (2a) als auch am Gehäuseprofil (1) mehrere Stützprofilelemente (10, 21, 22, 23) vorgesehen. Diese stützen insbesondere den zur Scharnierachse (17) koaxialen Schraubenfederteil jeder Scharnierfeder (9) . Am Blendenteil (2a) ist dazu eine längsverlaufende Stirnkante (10) vorgesehen, die ein kreisbogenförmig um einen Teil der Außenkontur des Schraubenfederteiles gebogenes Längsprofilteil aufweist. Auf einer gegenüberliegenden Innenseite ist der Schraubenfederteil ebenfalls an einem längsverlaufenden Stützsteg (22) des Blendenteiles (2a) gestützt, der in Verlängerung der Profilierung (15b) nach innen abragt. Im Bereich des oberen Randes (11) der Rückwand (3) des Gehäuseprofiles (1) ist ein nach oben abragender Stützsteg (21) vorgesehen, der die Schraubenfederteile (12) der Scharnierfedern (9) von unten stützt. Der zur Vorderseite des Gehäuseprofils (1) abragende Rand (11) weist an seinem vorderen Ende zudem ein hakenartig nach unten abgewinkeltes Stützprofil (23) auf, das den Ubergang des Federdrahtes der Scharnierfeder (9) zwischen dem zylindrischen Schraubenfederteil (12) und der inneren Längskante (20) stützt.

Die Stützprofilelemente des Blendenteiles (2b) für die Scharnierfedern (9) sind nahezu identisch mit denen des Gehäuseprofiles (1), so daß auch hier auf eine nähere Erläuterung verzichtet werden kann.

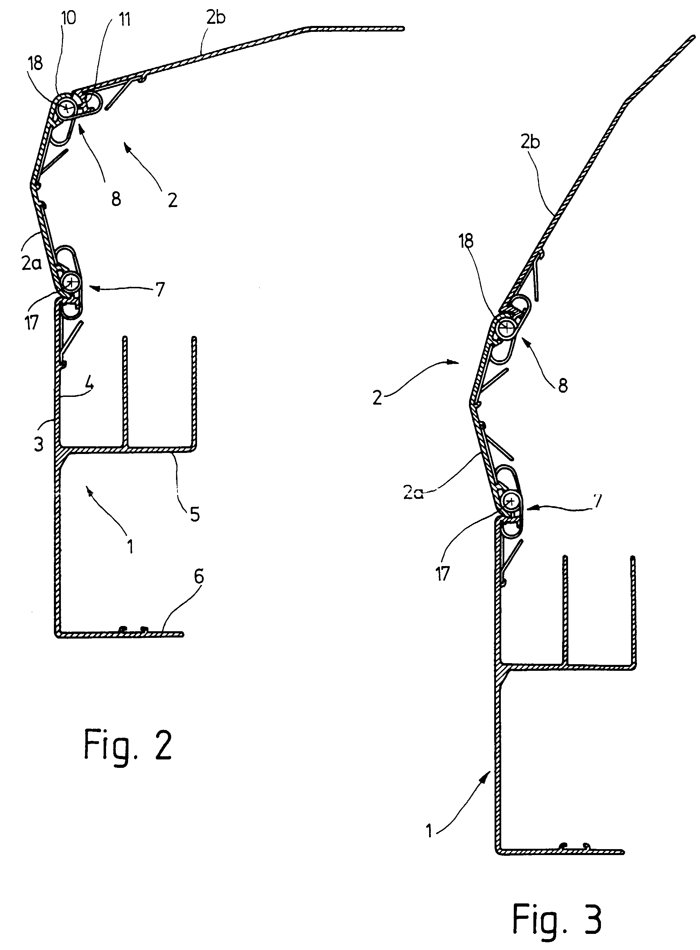

Der vom Rand (11) des Gehäuseprofils (1) nach cben abragende Stützsteg (21) dient außerdem als Endanschlag für die Öffnungsbewegung des Blendenteiles (2a), da dort bei einem bestimmten Öffnungswinkel (Fig. 3) die Stirnkante (10) des Blendenteiles (3a) anschlägt. Die Fig. 6 zeigt die unbelastete Stellung der Scharnierfeder (9). Im eingebauten Zustand steht daher jede Scharnierfeder (9) unter Spannung, wobei je nach Wicklungssinn des Schraubenfederteiles (12) sich eine Torsionsfederbelastung - auf die Scharnierachse (17) bzw. die Schwenkachse (18) bezogen - im Uhrzeigersinn oder im Gegenuhrzeigersinn ergibt. Beim beschriebenen Ausführungsbeispiel wirken die Federbelastungen der Scharnierfedern (9) in Schließrichtung der Blende (2), so daß sich die Blende (2) im unbelasteten Zustand in einer geschlossenen Position ähnlich Fig. 1 befindet. Wirken die Scharnierfedern (9) entsprechend umgekehrt in Öffnungsrichtung, so ist zur Fixierung der geschlossenen Position der Blende (2) ein zusätzliches Schloß in Form einer Verrastung, einer Magnetfixierung oder ähnlichem vorgesehen.

## Patentansprüche

1. Wandinstallationskanal für Elektroinstallationseinrichtungen, mit einem entlang einer Wand montierbaren,längsgestreckten Gehäuseprofil und mit wenigstens einer um eine längs des Gehäuseprofils verlaufende Scharnierachse am Gehäuseprofil schwenkbar gelagerten Blende, die wenigstens eine Längsseite des Gehäuseprofils abdeckt, dadurch gekennzeichnet, daß sowohl an der Blende (2) als auch am Gehäuseprofil (1) parallel zur Scharnierachse (17) verlaufende und sich jeweils über deren Länge erstreckende Profilierungen (15a,15b; 16a,16b) vorgesehen sind, und daß wenigstens zwei über die Länge des Wandinstallationskanals in Abstand zueinander positionierbare Scharniere (9) vorgesehen sind, die mit den Profilierungen (15a,15b; 16a, 16b) an der Blende (2) und am Gehäuseprofil (1) in quer zur Scharnierachse (17) verlaufender Montagerichtung verrastbar sind.

2. Wandinstallationskanal nach Anspruch 1, dadurch gekennzeichnet, daß die Blende (2) in wenigstens zwei Teile (2a, 2b) längsgeteilt ist, wobei die Teile (2a, 2b) untereinander mit zur Scharnierachse (17) paralleler Schwenkachse (18) mittels Scharnieren (9) verbunden sind, die mit Profilierungen an den korrespondierenden Teilen (2a, 2b) der Blende (2) verrastet sind.

3. Wandinstallationskanal nach Anspruch 1 oder 2, dadurch gekennzeichnet, daß die Scharniere (9) um die Scharnierachse (17, 18) in einer Drehrichtung federbelastet sind.

4. Wandinstallationskanal nach einem der Ansprüche 1 bis 3, dadurch gekennzeichnet, daß als Profilierungen (15a, 15b; 16a, 16b) sowohl an der Blende (2) als auch am Gehäuseprofil (1) zwei in Abstand zueinander angeordnete Längsstege vorgesehen sind, die mit jeweils einer zum anderen Längssteg hin offenen längsverlaufenden Aufnahmenut versehen sind.

5. Wandinstallationskanal nach einem der vorhergehenden Ansprüche, dadurch gekennzeichnet, daß jedes Scharnier (9) zwei Scharnierschenkel aufweist, von denen einer an der Blende (2) und der andere am Gehäuseprofil (1) verrastbar sind.

6. Wandinstallationskanal nach Anspruch 5, dadurch gekennzeichnet, daß jeder Scharnierschenkel zwei einander gegenüberliegende und zu der Scharnierachse (17) parallele Längskanten (19, 20) aufweist, deren Abstand zueinander etwa dem gegenseitigen Abstand der korrespondierenden Aufnahmenuten entspricht, und die unter Verringerung ihres Abstandes elastisch gegeneinander zusammendrückbar sind.

7. Wandinstallationskanal nach einem der vorhergehenden Ansprüche, dadurch gekennzeichnet, daß jedes Scharnier (9) einstückig aus einem Federdraht unter Bildung eines zur Scharnierachse (17) koaxialen zylindrischen Schraubenfederteiles (12) und zwei von dem Schraubenfederteil (12) abragenden Federenden gebogen ist, wobei die Federenden als Scharnierschenkel mit gegenüberliegenden Längskanten (19, 20) gestaltet sind.

8. Wandinstallationskanal nach Anspruch 7, dadurch gekennzeichnet, daß jedes als Scharnierschenkel dienende Federende ein Griffelement (14) zum Zusammendrücken der Scharnierschenkel aufweist.

9. Wandinstallationskanal nach Anspruch 8, dadurch gekennzeichnet, daß die Scharnierschenkel eines Scharnieres (9) symmetrisch zueinander gestaltet sind.

10. Wandinstallationskanal nach Anspruch 9, dadurch gekennzeichnet, daß an beiden durch das Scharnier (9) zu verbindenden Teilen des Wandinstallationskanales längsverlaufende Stützprofilelemente (10, 21, 22, 23) vorgesehen sind, zwischen denen der zylindrische Schraubenfederteil (12) jedes Scharniers (9) gehalten ist.

11. Wandinstallationskanal nach Anspruch 10, dadurch gekennzeichnet, daß am Gehäuseprofil (1) wenigstens ein Anschlag (21) zur Begrenzung des Öffnungswinkels der Blende (2) vorgesehen ist.

12. Wandinstallationskanal nach Anspruch 10, dadurch gekennzeichnet, daß an den Teilen (2a, 2b) der Blende (2) korrespondierende Anschläge zur Begrenzung des Schwenkwinkels der Teile (2a, 2b) zueinander vorgesehen sind.

## Claims

1. Wall installation conduit for the installation of electrical equipment, with a housing section that extends longitudinally and can be fitted along a wall and which comprises at least one cover that can be tilted about a hinge axis located on the housing section and extending along its length, the said cover closing off at least one longitudinal side of the said housing section,
**characterized in that**
both on the cover (2) and on the housing section (1) profiles (15a, 15b; 16a, 16b) are provided which extend parallel to the hinge axis (17) and run along the length of the section, and that at least two hinges (9) which can be positioned along the length of the wall installation conduit some distance apart are also provided, the said hinges being fitted in an assembly direction transverse to the hinge axis (17) by virtue ot the profiles (15a, 15b; 16a, 16b) on the cover (2) and on the housing section (1).

2. Wall installation conduit according to Claim 1,
**characterized in that**
the cover (2) is longitudinally divided into at least two portions (2a, 2b) such that the said portions (2a, 2b) are connected together by hinges (9) along a tilt axis (18) parallel to the hinge axis (17), the said hinges being positioned by virtue of profiles on the corresponding portions (2a, 2b) of the cover (2).

3. Wall installation conduit according to Claims 1 or 2,
**characterized in that**
the hinges (9) are spring-loaded in their direction of rotation about the hinge axes (17, 18).

4. Wall installation conduit according to any of Claims 1 to 3,
**characterized in that**
to form the profiles (15a, 15b; 16a, 16b) both on the cover (2) and on the housing section (1), two longitudinal webs some distance apart are provided, each of which comprises a receiving groove opening towards the other longitudinal web.

5. Wall installation conduit according to any of the preceding Claims,
**characterized in that**
each hinge (9) comprises two hinge side-pieces, one that fits into the cover (2) while the other fits into the housing section (1).

6. Wall installation conduit according to Claim 5,
**characterized in that**
each of the hinge side-pieces comprises two longitudinal edges (19, 20) opposite one another and parallel to the hinge axis (17), whose distance apart corresponds approximately to the distance apart of the corresponding opposite receiving grooves, and which can be pressed together elastically to reduce their separation.

7. Wall installation conduit according to any of the preceding Claims,
**characterized in that**
each hinge (9) is made as a single component by bending a spring-wire to form a cylindrical helical spring portion (12) coaxial with the hinge axis (17) and comprising two spring ends that project from the said helical spring portion (12), such that the spring ends are designed as hinge side-pieces with opposite longitudinal edges (19, 20).

8. Wall installation conduit according to Claim 7,
**characterized in that**
each spring end serving as a hinge side-piece comprises a gripping element (14) to allow the hinge side-pieces to be pressed together.

9. Wall installation conduit according to Claim 8,
**characterized in that**
the hinge side-pieces of each hinge (9) are fonned symmetrically with respect to one another.

10. Wall installation conduit according to Claim 9,
**characterized in that**
longitudinally extending support profile elements (10, 21, 22, 23) are provided on the two parts of the wall installation conduit to be joined together by the hinge (9), between which the cylindrical helical spring portion (12) of each hinge (9) is held.

11. Wall installation conduit according to Claim 10,
**characterized in that**
on the housing section (1) at least one end-stop (21) is provided to restrict the opening angle ofthe cover (2).

12. Wall installation conduit according to Claim 10,
**characterized in that**
on the portions (2a, 2b) of the cover (2) corresponding end-stops are provided to restrict the tilt angle of the portions (2a, 2b) with respect to one another.

## Revendications

1. Conduit mural pour installations électriques, comprenant un logement profilé longitudinal, pouvant être monté le long d'un mur, incluant un axe de charnière s'étendant sur un coté du profilé et un volet monté pivotant autour de la charnière recouvrant au moins un coté longitudinal du profilé, caractérisé en ce qu'un axe de charnière (17) s'étend parallèlement tant au volet (2) qu'au logement profilé (1) et que sont prévus des bords profilés (15a,15b;16a,16b) s'étendant sur la longueur et en ce qu'au moins deux charnières (9) sont prévues qui s'étendent sur la longueur du conduit mural d'installation, positionnables à distance l'une de l'autre, qui sont maintenues par les bords profilés (15a,15b;16a,16b) sur le volet (2) et sur le logement (1) perpendiculairement à la direction de montage de l'axe de charnière (17).

2. Conduit pour installations électriques selon la revendication 1, caractérisé en ce que le volet (2) est divisé en au moins deux parties (2a,2b), l'une au-dessous de l'autre, reliées par une charnière (9) dont l'axe (18) est parallèle à l'axe de pivotement (17), les parties correspondantes étant maintenues dans les bords profilés.

3. Conduit mural pour installations électriques selon la revendication 1 ou 2, caractérisé en ce que les charnières (9) sont articulées autour des axes (17,18) et sont rappelées élastiquement dans une direction de pivotement.

4. Conduit mural pour installations électriques selon l'une des revendications 1 à 3, caractérisé en ce que les bords profilés (15a,15b;16a,16b) sont à distance tant du volet (2) que du logement (1) et que sont prévues des âmes longitudinales, chacune venant en prise avec l'autre par une rainure longitudinale.

5. Conduit mural pour installations électriques selon l'une des revendications précédentes, caractérisé en ce que chaque charnière (9) comprend deux côtés de charnière maintenus l'un dans le logement profilé (1) et l'autre dans le volet (2).

6. Conduit mural pour installations électriques selon la revendication 5, caractérisé en ce que côté de charnière comprend deux bords longitudinaux (19,20) reposant l'un au-dessus de l'autre, parallèlement à l'axe de charnière (17), dont la distance de l'un à l'autre correspond aux rainures de prise correspondantes et qui par réduction de leur distance sont pressées élastiquement.

7. Conduit mural pour installations électriques selon l'une des revendications précédentes, caractérisé en ce que chaque charnière (9) est constituée par une seule pièce de fil élastique repliée en deux parties coaxiales cylindriques formant ressort (12), de sorte que les ressorts constituent des côtés de charnière maintenus par leurs bords longitudinaux (19,20).

8. Conduit mural pour installations électriques selon la revendication 7 caractérisé en ce que chaque côté dune charnière (9) comprend un élément de prise (14) pour serrer les côtés de charnière.

9. Conduit mural pour installations électriques selon la revendication 8 caractérisé en ce que les côtés d'une charnière (9) sont symétriques.

10. Conduit mural pour installations électriques selon la revendication 9, caractérisé en ce que dans les deux parties reliées par la charnière (9), du coté du conduit mural d'installation , sont prévus des éléments profilés de protection (10,21,22,23), entre lesquels est maintenue la partie cylindrique du ressort (12) de chaque charnière (9).

11. Conduit mural pour installations électriques selon la revendication 10 caractérisé en ce que il est prévu sur le logement profilé (1) au moins une butée (21) pour limiter l'angle d'ouverture du volet (2).

12. Conduit mural pour installations électriques selon la revendication 10 caractérisé en ce que sont prévues sur les parties (2a,2b) du volet (2) des butées correspondantes pour limiter les angles de pivotement des parties (2a,2b) l'une par rapport à l'autre.
